# EUROPEAN PATENT APPLICATION

(11) **EP 4 631 651 A1**
(43) Date of publication of application: **15.10.2025**
(21) Application number: 24855109.5
(22) Date of filing: 30.09.2024
(51) Int. Cl.: B22F 10/38, B22F 10/28, B33Y 10/00, B33Y 80/00

(54) **4D PRINTED BIDIRECTIONAL INTELLIGENT TEMPERATURE CONTROL LATTICE STRUCTURE AND PREPARATION METHOD THEREFOR**

(30) Priority: 28.02.2024 CN 202410216762
(71) Applicant: Shenyang Research Institute of Foundry Co., Ltd., Liaoning 110022 (CN)
(72) Inventor: WEI, Yanpeng, Shenyang, Liaoning 110022 (CN); MA, Yingchun, Shenyang, Liaoning 110022 (CN); MIAO, Zhiquan, Shenyang, Liaoning 110022 (CN); YU, Bo, Shenyang, Liaoning 110022 (CN); LI, Huaiqian, Shenyang, Liaoning 110022 (CN); ZHOU, Haoran, Shenyang, Liaoning 110022 (CN); CHENG, Jingchang, Shenyang, Liaoning 110022 (CN); SHI, Jian, Shenyang, Liaoning 110022 (CN); GAO, Peng, Shenyang, Liaoning 110022 (CN)
(74) Representative: De Clercq & Partners
(86) International application number: PCT/CN2024/122852
(87) International publication number: WO 2025/179885

(57) **Abstract**

A 4D-printed bidirectional intelligent temperature control lattice structure is provided and a manufacturing method thereof are provided, which in particular relate to the technical field of additive manufacturing of lattice metals. The 4D-printed bidirectional intelligent temperature control lattice structure includes a plurality of lattice cells with micropores, the lattice cells with micropores arrayed and mirrored to form the 4D-printed bidirectional intelligent temperature control lattice structure; each lattice cell with micropores is a lattice cell obtained by stretching a truncated octahedron in the horizontal direction or compressing the truncated octahedron in the horizontal direction, each micropore is one of a rhombic micropore stretched in the horizontal direction, a rhombic micropore compressed in the horizontal direction, a square micropore stretched in the horizontal direction and a square micropore compressed in the horizontal direction, and the truncated octahedron is obtained by cutting the corners of a regular octahedron hollowed out inside. The present disclosure allows extremely high design freedom and meets the application requirements of the intelligent temperature control bidirectional lattice structure in the field of aeronautics and aerospace.

## Description

The present application claims the priority from the Chinese Patent Application No. 202410216762.9 filed on February 28, 2024, and the disclosure of the above-mentioned Chinese Patent Application is hereby incorporated by reference as a part of this application.

### TECHNICAL FIELD

The present disclosure belongs to the technical field of additive manufacturing of lattice metal, and in particular relates to a 4D-printed bidirectional intelligent temperature control lattice structure and a manufacturing method thereof.

### BACKGROUND

In recent years, with the rapid development of aeronautics and aerospace technology, aircraft has been developed to become increasingly high-speed, high-end and precise. Lattice structure has attracted wide attention in the field of aeronautics and aerospace because of its light weight, high specific density and high specific stiffness. Not only lattice metal has the characteristics of light weight, but also lattice metal design driven by function can give the structure more functional characteristics.

However, due to the serious aerodynamic heating phenomenon caused by high-speed flight, when the flight speed exceeds 6 Machs, temperature at the leading edge of the fuselage will exceed 1000 K. Such a high temperature environment poses a serious threat to the safe flight of the aircraft and also limits the further iterative upgrade of the high-speed aerospace vehicle. At present, research on multi-functionalization of lattice structure mainly focuses on aspects such as vibration and noise reduction, buffering and energy absorption, and there is little research on temperature adjustment and control.

Nickel-titanium alloy has high application potential in the field of aeronautics and aerospace because of its excellent shape memory effect and superelasticity. With the shape memory effect of nickel-titanium alloy, the lattice structure will be given the function of intelligent temperature control. That is, with the shape memory alloy sensing the change of ambient temperature, it is possible for the lattice structure to open and close intelligently to realize temperature control. At present, the following design concept of intelligent opening and closing of a lattice structure to realize temperature control is rarely reported in the field of aeronautics and aerospace: the shape memory effect of nickel-titanium alloy is used to make the lattice structure of closed cell open automatically when the ambient temperature rises and close automatically when the temperature drops, so as to control the outflow speed of cooling liquid and achieve the effect of intelligent temperature control. In addition, for the existing nickel-titanium shape memory alloy materials, the phase transition temperature is generally low, making them difficult to match the application requirements regarding temperature control function during the flight of aeronautics or aerospace vehicles, and a lattice structure that can realize bidirectional intelligent temperature control is not well known to the public.

Nickel-titanium alloy has material properties including superelasticity and high toughness, which makes it easy to wear tools during machining. In addition, it is difficult to manufacture complex configurations such as lattice metal by traditional machining technology, so that the application of nickel-titanium shape memory alloy is seriously limited in the field of aeronautics and aerospace. The appearance of additive manufacturing technology makes it possible to manufacture nickel-titanium shape memory alloy with complex configurations. Additive manufacturing is also called 3D printing. A manufacturing technology which is based on 3D printing and with which a three-dimensional object that self-changes physical properties under predetermined stimuli (such as heating, pressure, electrification, magnetic field, illumination, etc.) is made is called 4D printing. A 4D-printed product can change spontaneously according to the specific needs of application scenarios and the specific action conditions of stimulus factors, showing adaptive characteristics.

### SUMMARY

According to the present disclosure, a 4D-printed bidirectional intelligent temperature control lattice structure and a manufacturing method thereof are provided.

According to the present disclosure, the following technical solution is provided.

According to the present disclosure, a 4D-printed bidirectional intelligent temperature control lattice structure is provided, which includes a plurality of lattice cells with micropores, the lattice cells with micropores arrayed and mirrored along X, Y and Z directions to form the 4D-printed bidirectional intelligent temperature control lattice structure; each lattice cell with micropores is a lattice cell obtained by stretching a truncated octahedron in the horizontal direction or compressing the truncated octahedron in the horizontal direction, each micropore is one of a rhombic micropore stretched in the horizontal direction, a rhombic micropore compressed in the horizontal direction, a square micropore stretched in the horizontal direction and a square micropore compressed in the horizontal direction, and the truncated octahedron is obtained by cutting the corners of a regular octahedron hollowed out inside.

Further, the ratio of length : width : height of the lattice cell obtained by stretching in the horizontal direction is 2 ~ 4 : 1 : 1, the length of the lattice cell obtained by stretching in the horizontal direction is 5 mm ~ 30 mm, the length ratio of the two diagonal lines of the rhombic micropore stretched in the horizontal direction is 2 ~ 4 : 1, the length of the short diagonal line of the rhombic micropore stretched in the horizontal direction is 0.2 mm ~ 1 mm, and the length of the diagonal line of the square micropore stretched in the horizontal direction is 0.2 mm ~ 1 mm. The ratio of length : width : height of the lattice cell obtained by compressing in the horizontal direction is 0.25 ~ 0.5 : 1 : 1, the length of the lattice cell obtained by compressing in the horizontal direction is 5 mm ~ 10 mm, the length ratio of the two diagonal lines of the rhombic micropore compressed in the horizontal direction is 0.25 ~ 0.5 : 1, the length of the short diagonal line of the rhombic micropore compressed in the horizontal direction is 0.2 mm ~ 1 mm, and the length of the diagonal line of the square micropore compressed in the horizontal direction is 0.4 mm ~ 4 mm. The porosity range of the 4D-printed bidirectional intelligent temperature control lattice structure is 15% ~ 65%, and the thickness of the shell of the lattice structure is 1.5 mm ~ 4.4 mm.

Further, when the ambient temperature increases to the preset temperature, the lattice structure automatically opens, and the cooling liquid may flow out from the pores of the lattice, and when the ambient temperature is lower than the preset temperature, the lattice structure automatically closes. The preset temperature is 80°C ~ 110 °C.

Further, according to the present disclosure, a method for manufacturing a 4D-printed bidirectional intelligent temperature control lattice structure is proposed, for which selective laser melting additive manufacturing process is adopted for manufacturing and processing, and which includes the following steps.
step 1, carrying out process adaptability design on pore structure for the lattice structure with three-dimensional design software, and establishing a three-dimensional model of the lattice structure;
step 2, slicing the three-dimensional model of the lattice structure established in step 1 with slicing software, and manufacturing the lattice structure using the selective laser melting additive manufacturing process characterized by a low volumetric energy density and a high scanning speed,
step 3, carrying out quasi-static compression on the lattice structure obtained in step 2 along the direction perpendicular to the working face until the pores are closed, then holding the pressure of compression, then unloading the pressure of compression, and after the unloading, heating the lattice structure with the closed pores, and then cooling the lattice structure to room temperature, repeating the above operation on the obtained lattice structure for 15 ~ 50 cycles to obtain the final 4D-printed bidirectional intelligent temperature control lattice structure.

Further, in step 2, the low volumetric energy density is 26.67 J/mm³ ~ 125 J/mm³, and the high scanning speed is 800 mm/s ~ 1500 mm/s; the laser power is 100 W ~ 300 W, the hatch spacing is 20 µm ~ 125 µm, the hatch angle is 45° ~ 90°, and the layer thickness is 20 µm ~ 50 µm.

Further, in step 3, the pressure of the quasi-static compression is 450 MPa ~ 750 MPa, the duration for holding the pressure of compression is 10 s ~ 20 s, and the lattice structure is heated to the temperature of 120°C ~ 200°C.

Further, the matrix material for manufacturing the 4D-printed bidirectional intelligent temperature control lattice structure is nickel-titanium shape memory alloy powder, the mass fraction of nickel in the nickel-titanium shape memory alloy powder is 54.2% ~ 54.8%, and the particle size of the powder is 15 µm ~ 53 µm.

Further, the 4D-printed bidirectional intelligent temperature control lattice structure is used for manufacturing a high-temperature service part of an aerospace vehicle.

The present disclosure has the following beneficial effects.
1. Bidirectional intelligent opening and closing: according to the present disclosure, lattice metal design is combined with shape memory alloy, nickel-titanium alloy powder with a mass fraction of 54.2 ~ 54.8% for nickel element is adopted, the shape memory effect of nickel-titanium alloy under a condition of temperature excitation is utilized, and characteristics of selective laser melting additive manufacturing are combined to integrally form the 4D-printed bidirectional intelligent temperature control lattice structure. Under the condition of temperature excitation, bidirectional intelligent temperature control lattice structure manufactured according to the present disclosure can open and close intelligently, and whether the cooling liquid flows out from the pores of the lattice structure can be controlled according to the ambient temperature.
2. High preset temperature: according to the present disclosure, the preset temperature of the intelligent temperature control lattice switch is effectively improved through design of the alloy composition and control of the additive manufacturing process. The preset temperature of the intelligent temperature control bidirectional lattice structure switch can be freely controlled within a range of 80°C ~ 110°C, which is close to the extreme value of the response temperature of such shape memory alloy materials, so that the application range of the nickel-titanium shape memory alloy is effectively expanded in the field of aeronautics and aerospace.
3. Controllable cooling liquid flow rate: according to the present disclosure, an intelligent temperature control bidirectional lattice structure with a relatively small pore size is designed, and the minimum diagonal size of the model pore is only 0.2 mm ~ 1 mm. After the lattice structure from additive manufacturing is formed with post processing, the minimum diagonal size of the lattice pores can change intelligently within a range of 0 mm ~ 1 mm according to the ambient temperature. With the change of the lattice pore size, the cooling liquid flow rate can be effectively controlled, so that the application requirements of the intelligent temperature control bidirectional lattice structure in the field of aeronautics and aerospace are satisfied.
4. Strong designability: according to the present disclosure, the selective laser melting additive manufacturing process is adopted to manufacture the intelligent temperature control bidirectional lattice structure switch. In the applications such as aeronautics and aerospace vehicles, the appearance of the bidirectional lattice structure switch can be freely adjusted according to application requirements, leading to extremely high freedom of design. In addition, due to the process characteristics of additive manufacturing process, there is no mold processing in the manufacturing process, and the manufacturing process is not restricted by the alloy system or the workpiece shape, leading to extremely high freedom of forming the intelligent temperature control bidirectional lattice structure switch with complex configuration.

### BRIEF DESCRIPTION OF THE DRAWINGS

Fig. 1 is an axonometric schematic diagram of a cell of a 4D-printed bidirectional intelligent temperature control lattice structure of embodiment one.
Fig. 2 is an axonometric schematic diagram of a cell of a 4D-printed bidirectional intelligent temperature control lattice structure of embodiment two.
Fig. 3 is an axonometric schematic diagram of a cell of a 4D-printed bidirectional intelligent temperature control lattice structure of embodiment three.
Fig. 4 is an axonometric schematic diagram of a cell of a 4D-printed bidirectional intelligent temperature control lattice structure of embodiment four.
Fig. 5 is an axonometric schematic diagram of a cell of a 4D-printed bidirectional intelligent temperature control lattice structure of embodiment five.
Fig. 6 is a schematic front view of a lattice cell with micropores of embodiment one.
Fig. 7 is a schematic front view of a lattice cell with micropores of embodiment two.
Fig. 8 is a schematic front view of a lattice cell with micropores of embodiment three.
Fig. 9 is a schematic front view of a lattice cell with micropores of embodiment four.
Fig. 10 is a schematic front view of a lattice cell with micropores of embodiment five.
Fig. 11 is a schematic diagram of the lattice of the 4D-printed bidirectional intelligent temperature control lattice structure of embodiment one.
Fig. 12 is a schematic diagram of the lattice of the 4D-printed bidirectional intelligent temperature control lattice structure of embodiment four.
Fig. 13 is a picture showing appearance of a 4D-printed bidirectional intelligent temperature control lattice structure sample before the pores close.
Fig. 14 is a picture showing appearance of a 4D-printed bidirectional intelligent temperature control lattice structure sample after the pores close.
Fig. 15 is the DSC curve of the matrix material of the 4D-printed bidirectional intelligent temperature control lattice structure.

### DETAILED DESCRIPTION OF THE EMBODIMENTS

The method of manufacturing of the present disclosure will be described in detail below with reference to the attached drawings. The examples given are only for explaining the present disclosure, not for limiting the scope of the present disclosure. The lattice structure is an integral structural component manufactured by the additive manufacturing process, and there is no need for additional processing steps such as welding.

According to the present disclosure, a 4D-printed bidirectional intelligent temperature control lattice structure is provided, which includes a plurality of lattice cells with micropores, the lattice cells with micropores arrayed and mirrored along X, Y and Z directions to form the 4D-printed bidirectional intelligent temperature control lattice structure; each lattice cell with micropores is a lattice cell obtained by stretching a truncated octahedron in the horizontal direction or compressing the truncated octahedron in the horizontal direction, each micropore is one of a rhombic micropore stretched in the horizontal direction, a rhombic micropore compressed in the horizontal direction, a square micropore stretched in the horizontal direction and a square micropore compressed in the horizontal direction, and the truncated octahedron is obtained by cutting corners of a regular octahedron hollowed out inside.

### Embodiment one

A 4D-printed bidirectional intelligent temperature control lattice structure is manufactured by selective laser melting additive manufacturing process with following specific steps.

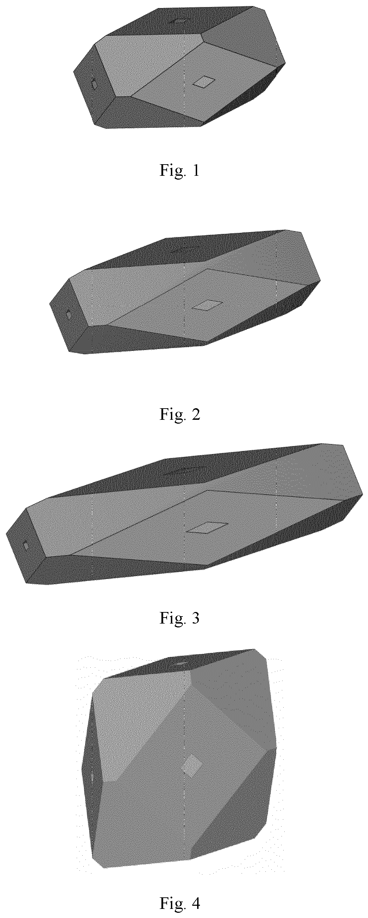

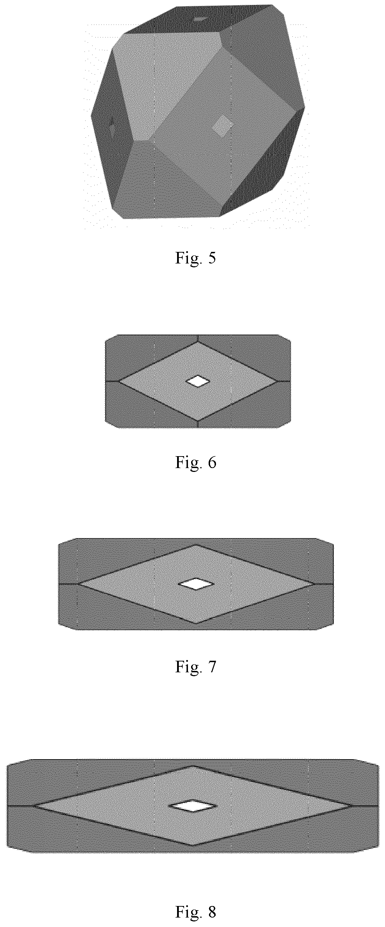

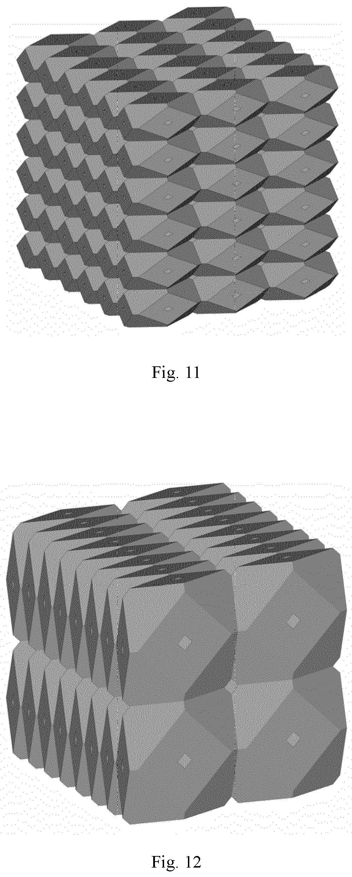

In step 1, process adaptability design on pore structure for the lattice structure is carried out with three-dimensional design software, and a three-dimensional model of the lattice structure is established. The ratio of length : width : height of the lattice cell obtained by stretching in the horizontal direction is 2 : 1 : 1, and the length of the lattice cell obtained by stretching in the horizontal direction is 15 mm. An axonometric schematic diagram of a cell of the 4D-printed bidirectional intelligent temperature control lattice structure of embodiment one is shown in Fig. 1. The length ratio of the two diagonal lines of the rhombic micropore stretched in the horizontal direction is 2 : 1, the length of the short diagonal line of the rhombic micropore stretched in the horizontal direction is 1 mm, and the length of the diagonal line of the square micropore stretched in the horizontal direction is 1 mm. The void ratio of the 4D-printed bidirectional intelligent temperature control lattice is 48%, and the thickness of the shell of the lattice structure is 2 mm. Fig. 6 is a schematic front view of a lattice cell with micropores of embodiment one. The lattice cells with micropores are arrayed and mirrored along X, Y and Z directions to form the 4D-printed bidirectional intelligent temperature control lattice structure. A schematic diagram of the lattice of the 4D-printed bidirectional intelligent temperature control lattice structure of embodiment one is shown in Fig. 11.

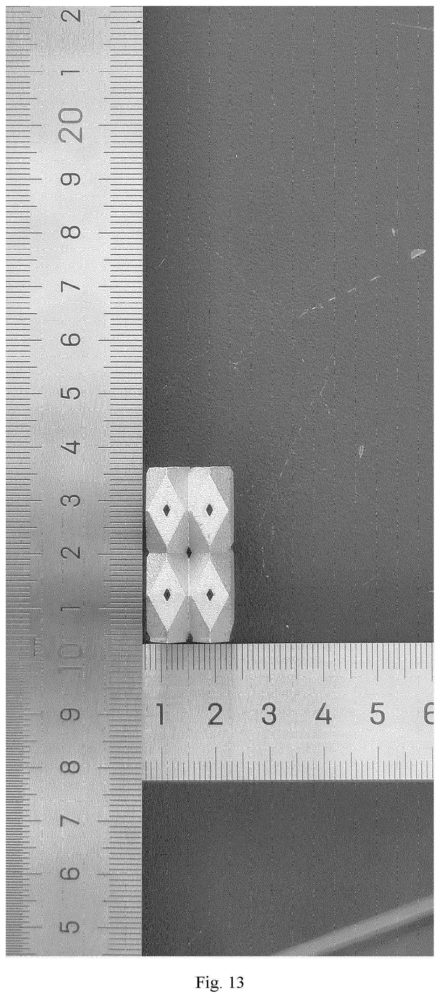

In step 2, the three-dimensional model of the lattice structure established in step 1 is sliced with slicing software, and the lattice structure is manufactured using the selective laser melting additive manufacturing process characterized by a low volumetric energy density and a high scanning speed. The low volumetric energy density is 66.67 J/mm³, the high scanning speed is 1200 mm/s, the laser power is 200 W, the hatch spacing is 125 µm, the hatch angle is 90°, and the layer thickness is 20 µm. The matrix material for manufacturing the intelligent temperature control bidirectional lattice structure is nickel-titanium shape memory alloy powder, the mass fraction of nickel in the nickel-titanium shape memory alloy is 54.2% ~ 54.8%, and the particle size of the powder is 15 µm ~ 53 µm. The appearance of the obtained 4D-printed bidirectional intelligent temperature control lattice structure sample before the pores close is shown in Fig. 13.

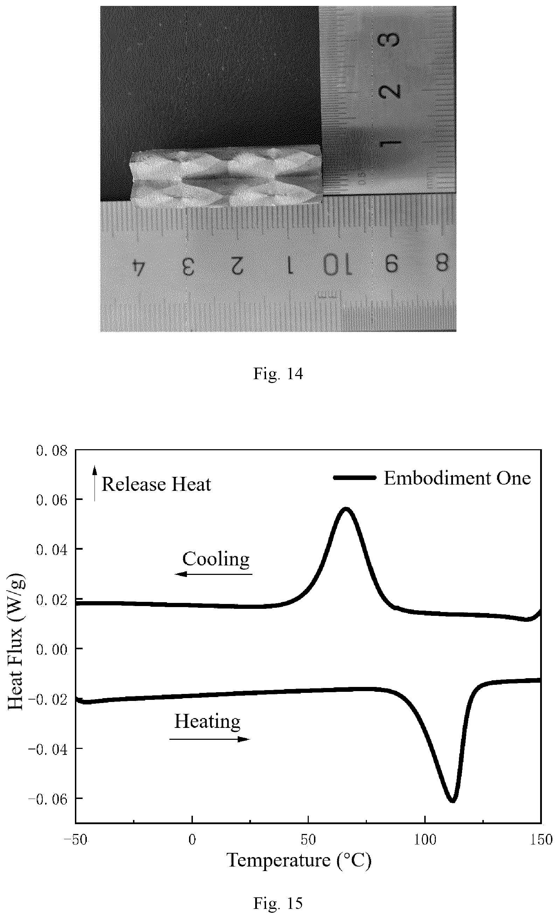

In step 3, quasi-static compression of 650 MPa is carried out on the lattice structure obtained in step 2 along the direction perpendicular to the working face until the pores are closed, then the pressure of compression is held for 15 S, then the pressure of compression is unloaded, and after the unloading, the lattice structure with the closed pores is heated to 150°C, and then the lattice structure is cooled to room temperature, the above operation is repeated on the obtained lattice structure for 40 cycles, and the appearance of the finally obtained 4D-printed bidirectional intelligent temperature control lattice structure sample after the pores close is shown in Fig. 14.

For the 4D-printed bidirectional intelligent temperature control lattice structure manufactured according to this embodiment, when the ambient temperature increases to the preset temperature of 95°C, the pores of the lattice structure automatically open, and the cooling liquid can flow out from the pores of the lattice structure, and when the ambient temperature is lower than the preset temperature, the pores of the lattice structure automatically close. The DSC curve of the matrix material of the 4D-printed bidirectional intelligent temperature control lattice structure is shown in Fig. 15.

### Comparative example one

Compared with embodiment one, for comparative example one, a higher volumetric energy density and a lower scanning speed is used, with the higher volumetric energy density being 160 J/mm³ and the lower scanning speed being 500 mm/s. Other experimental parameters are completely consistent with embodiment one.

According to the experimental solution of comparative example one, when the ambient temperature increases to 45°C, the pores of the 4D-printed bidirectional intelligent temperature control lattice structure have automatically opened.

### Comparative example two

Compare with embodiment one, for comparative example two, the lattice structure is subjected the treatment of compression that closes the pores only once.

In step 3, the lattice structure obtained in step 2 is subjected to quasi-static compression of 650 MPa along the direction perpendicular to the working face until the pores are closed, then the pressure of compression is held for 15 S, after which the cyclic treatment of heating-cooling-loading is not carried out, while other experimental parameters and steps are completely consistent with embodiment one.

For the lattice structure of comparative example two, when the ambient temperature rises to the preset temperature of 95°C, the pores can open slowly. However, after cooling to the preset temperature of 95°C, and even after cooling to below room temperature, the pores remain unchanged. In the subsequent heating and cooling process, the pores of the lattice structure cannot be closed. The 4D-printed bidirectional intelligent temperature control lattice structure cannot be obtained with the above experimental method.

### Embodiment two

A 4D-printed bidirectional intelligent temperature control lattice structure is manufactured by selective laser melting additive manufacturing process with following specific steps.

In step 1, process adaptability design on pore structure for the lattice structure is carried out with three-dimensional design software, and a three-dimensional model of the lattice structure is established. The ratio of length : width : height of the lattice cell obtained by stretching in the horizontal direction is 3 : 1 : 1, and the length of the lattice cell obtained by stretching in the horizontal direction is 5 mm. An axonometric schematic diagram of a cell of the 4D-printed bidirectional intelligent temperature control lattice structure of embodiment two is shown in Fig. 2. The length ratio of the two diagonal lines of the rhombic micropore stretched in the horizontal direction is 3 : 1, the length of the short diagonal line of the rhombic micropore stretched in the horizontal direction is 0.2 mm, and the length of the diagonal line of the square micropore stretched in the horizontal direction is 0.2 mm. The void ratio of the 4D-printed bidirectional intelligent temperature control lattice is 15%, and the thickness of the shell of the lattice structure is 3.5 mm. Fig. 7 is a schematic front view of a lattice cell with micropores of embodiment two. The lattice cells with micropores are arrayed and mirrored along X, Y and Z directions to form the 4D-printed bidirectional intelligent temperature control lattice structure.

In step 2, the three-dimensional model of the lattice structure established in step 1 is sliced with slicing software, and the lattice structure is manufactured using the selective laser melting additive manufacturing process characterized by a low volumetric energy density and a high scanning speed. The low volumetric energy density is 26.67 J/mm³, the high scanning speed is 1500 mm/s, the laser power is 100 W, the hatch spacing is 50 µm, the hatch angle is 45°, and the layer thickness is 50 µm. The matrix material for manufacturing the intelligent temperature control bidirectional lattice structure is nickel-titanium shape memory alloy powder, the mass fraction of nickel in the nickel-titanium shape memory alloy is 54.2% ~ 54.8%, and the particle size of the powder is 15 µm ~ 53 µm.

In step 3, quasi-static compression of 450 MPa is carried out on the lattice structure obtained in step 2 along the direction perpendicular to the working face until the pores are closed, then the pressure of compression is held for 10 S, then the pressure of compression is unloaded, and after the unloading, the lattice structure with the closed pores is heated to 120°C, and then the lattice structure is cooled to room temperature, the above operation is repeated on the obtained lattice structure for 15 cycles, and the final bidirectional intelligent temperature control lattice structure is obtained.

For the 4D-printed bidirectional intelligent temperature control lattice structure manufactured according to this embodiment, when the ambient temperature increases to the preset temperature of 80°C, the pores of the lattice structure automatically open, and the cooling liquid can flow out from the pores of the lattice structure, and when the ambient temperature is lower than the preset temperature, the pores of the lattice structure automatically close.

### Embodiment three

A 4D-printed bidirectional intelligent temperature control lattice structure is manufactured by selective laser melting additive manufacturing process with following specific steps.

In step 1, process adaptability design on pore structure for the lattice structure is carried out with three-dimensional design software, and a three-dimensional model of the lattice structure is established. The ratio of length : width : height of the lattice cell obtained by stretching in the horizontal direction is 4 : 1 : 1, and the length of the lattice cell obtained by stretching in the horizontal direction is 30 mm. An axonometric schematic diagram of a cell of the 4D-printed bidirectional intelligent temperature control lattice structure of embodiment three is shown in Fig. 3. The length ratio of the diagonal lines of the square micropore stretched in the horizontal direction is 4 : 1, the length of the short diagonal line of the rhombic micropore stretched in the horizontal direction is 0.5 mm, and the length of the diagonal line of the square micropore on the surface of the cell is 0.5 mm. The void ratio of the 4D-printed bidirectional intelligent temperature control lattice is 65%, and the thickness of the shell of the lattice structure is 4.4 mm. Fig. 8 is a schematic front view of a lattice cell with micropores of embodiment three. The lattice cells with micropores are arrayed and mirrored along X, Y and Z directions to form the 4D-printed bidirectional intelligent temperature control lattice structure.

In step 2, the three-dimensional model of the lattice structure established in step 1 is sliced with slicing software, and the lattice structure is manufactured using the selective laser melting additive manufacturing process characterized by a low volumetric energy density and a high scanning speed. The low volumetric energy density is 125 J/mm³, and the high scanning speed is 1000 mm/s. Other process parameters include laser power of 100 W, hatch spacing of 20 µm, hatch angle of 67° and layer thickness of 40 µm. The matrix material for manufacturing the intelligent temperature control bidirectional lattice structure is nickel-titanium shape memory alloy powder, the mass fraction of nickel in the nickel-titanium shape memory alloy is 54.2% ~ 54.8%, and the particle size of the powder is 15 µm ~ 53 µm.

In step 3, quasi-static compression of 750 MPa is carried out on the lattice structure obtained in step 2 along the direction perpendicular to the working face until the pores are closed, then the pressure of compression is held for 20 S, then the pressure of compression is unloaded, and after the unloading, the lattice structure with the closed pores is heated to 200°C, and then the lattice structure is cooled to room temperature, the above operation is repeated on the obtained lattice structure for 50 cycles, and the final bidirectional intelligent temperature control lattice structure is obtained.

For the 4D-printed bidirectional intelligent temperature control lattice structure manufactured according to this embodiment, when the ambient temperature increases to the preset temperature of 110°C, the pores of the lattice structure automatically open, and the cooling liquid can flow out from the pores of the lattice structure, and when the ambient temperature is lower than the preset temperature, the pores of the lattice structure automatically close.

### Embodiment four

A 4D-printed bidirectional intelligent temperature control lattice structure is manufactured by selective laser melting additive manufacturing process with following specific steps.

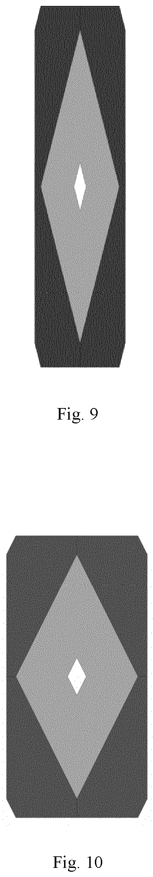

In step 1, process adaptability design on pore structure for the lattice structure is carried out with three-dimensional design software, and a three-dimensional model of the lattice structure is established. The ratio of length : width : height of the lattice cell obtained by compressing in the horizontal direction is 0.25 : 1 : 1, and the length of the lattice cell obtained by compressing in the horizontal direction is 5 mm. An axonometric schematic diagram of a cell of the 4D-printed bidirectional intelligent temperature control lattice structure of embodiment four is shown in Fig. 4. The length ratio of the diagonal lines of the square micropore compressed in a single horizontal direction is 0.25 : 1, the length of the short diagonal line of the rhombic micropore compressed in the horizontal direction is 1 mm, and the length of the diagonal line of the square micropore on the surface of the cell is 4 mm. The void ratio of the 4D-printed bidirectional intelligent temperature control lattice is 42%, and the thickness of the shell of the lattice structure is 1.5 mm. Fig. 9 is a schematic front view of a lattice cell with micropores of embodiment four. A schematic lattice diagram of the 4D-printed bidirectional intelligent temperature control lattice structure obtained by arraying and mirroring the lattice cells with micropores along X, Y and Z directions is shown in Fig. 12.

In step 2, the three-dimensional model of the lattice structure established in step 1 is sliced with slicing software, and the lattice structure is manufactured using the selective laser melting additive manufacturing process characterized by a low volumetric energy density and a high scanning speed. The low volumetric energy density is 75 J/mm³, the high scanning speed is 800 mm/s, the laser power is 300 W, the hatch spacing is 100 µm, the hatch angle is 90°, and the layer thickness is 50 µm. The matrix material for manufacturing the intelligent temperature control bidirectional lattice structure is nickel-titanium shape memory alloy powder, the mass fraction of nickel in the nickel-titanium shape memory alloy is 54.2% ~ 54.8%, and the particle size of the powder is 15 µm ~ 53 µm.

In step 3, quasi-static compression of 700 MPa is carried out on the lattice structure obtained in step 2 along the direction perpendicular to the working face until the pores are closed, then the pressure of compression is held for 18 S, then the pressure of compression is unloaded, and after the unloading, the lattice structure with the closed pores is heated to 180°C, and then the lattice structure is cooled to room temperature, the above operation is repeated on the obtained lattice structure for 45 cycles, and the final bidirectional intelligent temperature control lattice structure is obtained.

For the 4D-printed bidirectional intelligent temperature control lattice structure manufactured according to this embodiment, when the ambient temperature increases to the preset temperature of 85°C, the pores of the lattice structure automatically open, and the cooling liquid can flow out from the pores of the lattice structure, and when the ambient temperature is lower than the preset temperature, the pores of the lattice structure automatically close.

### Embodiment five

A 4D-printed bidirectional intelligent temperature control lattice structure is manufactured by selective laser melting additive manufacturing process with following specific steps.

In step 1, process adaptability design on pore structure for the lattice structure is carried out with three-dimensional design software, and a three-dimensional model of the lattice structure is established. The ratio of length : width : height of the lattice cell obtained by compressing in the horizontal direction is 0.5 : 1 : 1, and the length of the lattice cell obtained by compressing in the horizontal direction is 10 mm. An axonometric schematic diagram of a cell of the 4D-printed bidirectional intelligent temperature control lattice structure of embodiment five is shown in Fig. 5. The length of the short diagonal line of the rhombic micropore compressed in the horizontal direction is 0.5 : 1, the length of the short diagonal line of the rhombic micropore compressed in the horizontal direction is 0.2 mm, and the length of the diagonal line of the square micropore on the surface of the cell is 0.4 mm. The void ratio of the 4D-printed bidirectional intelligent temperature control lattice is 63%, and the thickness of the shell of the lattice structure is 4.2 mm. Fig. 10 is a schematic front view of a lattice cell with micropores of embodiment five. The lattice cells with micropores are arrayed and mirrored along X, Y and Z directions to form the 4D-printed bidirectional intelligent temperature control lattice structure.

In step 2, the three-dimensional model of the lattice structure established in step 1 is sliced with slicing software, and the lattice structure is manufactured using the selective laser melting additive manufacturing process characterized by a low volumetric energy density and a high scanning speed. The low volumetric energy density is 85.23 J/mm³, the high scanning speed is 1100 mm/s, the laser power is 150 W, the hatch spacing is 80 µm, the hatch angle is 75°, and the layer thickness is 20 µm. The matrix material for manufacturing the intelligent temperature control bidirectional lattice structure is nickel-titanium shape memory alloy powder, the mass fraction of nickel in the nickel-titanium shape memory alloy is 54.2% ~ 54.8%, and the particle size of the powder is 15 µm ~ 53 µm.

In step 3, quasi-static compression of 750 MPa is carried out on the lattice structure obtained in step 2 along the direction perpendicular to the working face until the pores are closed, then the pressure of compression is held for 20 S, then the pressure of compression is unloaded, and after the unloading, the lattice structure with the closed pores is heated to 120°C, and then the lattice structure is cooled to room temperature, the above operation is repeated on the obtained lattice structure for 50 cycles, and the final bidirectional intelligent temperature control lattice structure is obtained.

For the 4D-printed bidirectional intelligent temperature control lattice structure manufactured according to this embodiment, when the ambient temperature increases to the preset temperature of 90°C, the pores of the lattice structure automatically open, and the cooling liquid can flow out from the pores of the lattice structure, and when the ambient temperature is lower than the preset temperature, the pores of the lattice structure automatically close.

### Embodiment six

A 4D-printed bidirectional intelligent temperature control lattice structure is manufactured by selective laser melting additive manufacturing process with following specific steps.

In step 1, process adaptability design on pore structure for the lattice structure is carried out with three-dimensional design software, and a three-dimensional model of the lattice structure is established. The ratio of length : width : height of the lattice cell obtained by compressing in the horizontal direction is 0.4 : 1 : 1, and the length of the lattice cell obtained by compressing in the horizontal direction is 8 mm. The length of the short diagonal line of the rhombic micropore compressed in the horizontal direction is 0.4 : 1, the length of the short diagonal line of the rhombic micropore compressed in the horizontal direction is 0.4 mm, and the length of the diagonal line of the square micropore on the surface of the cell is 1 mm. The void ratio of the 4D-printed bidirectional intelligent temperature control lattice is 55%, and the thickness of the shell of the lattice structure is 3.5 mm. The lattice cells with micropores are arrayed and mirrored along X, Y and Z directions to form the 4D-printed bidirectional intelligent temperature control lattice structure.

In step 2, the three-dimensional model of the lattice structure established in step 1 is sliced with slicing software, and the lattice structure is manufactured using the selective laser melting additive manufacturing process characterized by a low volumetric energy density and a high scanning speed. The low volumetric energy density is 66.67 J/mm³, the high scanning speed is 1000 mm/s, the laser power is 200 W, the hatch spacing is 100 µm, the hatch angle is 55°, and the layer thickness is 30 µm. The matrix material for manufacturing the intelligent temperature control bidirectional lattice structure is nickel-titanium shape memory alloy powder, the mass fraction of nickel in the nickel-titanium shape memory alloy is 54.2% ~ 54.8%, and the particle size of the powder is 15 µm ~ 53 µm.

In step 3, quasi-static compression of 450 MPa is carried out on the lattice structure obtained in step 2 along the direction perpendicular to the working face until the pores are closed, then the pressure of compression is held for 10 S, then the pressure of compression is unloaded, and after the unloading, the lattice structure with the closed pores is heated to 200°C, and then the lattice structure is cooled to room temperature, the above operation is repeated on the obtained lattice structure for 15 cycles, and the final bidirectional intelligent temperature control lattice structure is obtained.

For the 4D-printed bidirectional intelligent temperature control lattice structure manufactured according to this embodiment, when the ambient temperature increases to the preset temperature of 95°C, the pores of the lattice structure automatically open, and the cooling liquid can flow out from the pores of the lattice structure, and when the ambient temperature is lower than the preset temperature, the pores of the lattice structure automatically close.

Matters not covered in the present disclosure are known in the existing art.

The above embodiments are only for explaining the technical concept and characteristics of the present disclosure, and the purpose of the above embodiments is to enable people familiar with the technology to understand the content of the present disclosure and implement it accordingly, without limiting the protection scope of the present disclosure. All equivalent changes or modifications made according to the spirit of the present disclosure should be included in the protection scope of the present disclosure.

## Claims

1. A 4D-printed bidirectional intelligent temperature control lattice structure, **characterized in** comprising a plurality of lattice cells with micropores, the lattice cells with micropores arrayed and mirrored along X, Y and Z directions to form the 4D-printed bidirectional intelligent temperature control lattice structure; wherein each lattice cell with micropores is a lattice cell obtained by stretching a truncated octahedron in a horizontal direction or compressing the truncated octahedron in the horizontal direction, wherein each micropore is one of a rhombic micropore stretched in the horizontal direction, a rhombic micropore compressed in the horizontal direction, a square micropore stretched in the horizontal direction and a square micropore compressed in the horizontal direction, and the truncated octahedron is obtained by cutting corners of a regular octahedron hollowed out inside; when an ambient temperature increases to a preset temperature, the lattice structure automatically opens, and cooling liquid can flow out from the pores of the lattice, and when the ambient temperature is lower than the preset temperature, the lattice structure automatically closes, the preset temperature being 80°C ~ 110 °C;
wherein the 4D-printed bidirectional intelligent temperature control lattice structure is manufactured and processed by selective laser melting additive manufacturing process with following specific steps:
step 1, carrying out process adaptability design on pore structure for the lattice structure with three-dimensional design software, and establishing a three-dimensional model of the lattice structure;
step 2, slicing the three-dimensional model of the lattice structure established in step 1 with slicing software, and manufacturing the lattice structure using the selective laser melting additive manufacturing process **characterized by** a low volumetric energy density and a high scanning speed;
step 3, carrying out quasi-static compression on the lattice structure obtained in step 2 along a direction perpendicular to a working face until the pores are closed, then holding pressure of compression, then unloading the pressure of compression, and after the unloading, heating the lattice structure with closed pores, and then cooling the lattice structure to room temperature, repeating the above operation on the obtained lattice structure for 15 ~ 50 cycles to obtain a final 4D-printed bidirectional intelligent temperature control lattice structure;
wherein in step 2, the low volumetric energy density is 26.67 J/mm³ ~ 125 J/mm³, and the high scanning speed is 800 mm/s ~ 1500 mm/s;
a laser power is 100 W ~ 300 W, a hatch spacing is 20 µm ~ 125 µm, a hatch angle is 45° ~ 90°, and a layer thickness is 20 µm ~ 50 µm; and wherein a matrix material for manufacturing the 4D-printed bidirectional intelligent temperature control lattice structure is nickel-titanium shape memory alloy powder, a mass fraction of nickel in the nickel-titanium shape memory alloy powder is 54.2% ~ 54.8%, and a particle size of the powder is 15 µm ~ 53 µm.

2. The 4D-printed bidirectional intelligent temperature control lattice structure according to claim 1, **characterized in that**, a ratio of length : width : height of each lattice cell obtained by stretching in the horizontal direction is 2 ~ 4 : 1 : 1, a length of each lattice cell obtained by stretching in the horizontal direction is 5 mm ~ 30 mm, a length ratio of two diagonal lines of the rhombic micropore stretched in the horizontal direction is 2 ~ 4 : 1, a length of a short diagonal line of the rhombic micropore stretched in the horizontal direction is 0.2 mm ~ 1 mm, and a length of a diagonal line of the square micropore stretched in the horizontal direction is 0.2 mm ~ 1 mm; a ratio of length : width : height of each lattice cell obtained by compressing in the horizontal direction is 0.25 ~ 0.5 : 1 : 1, a length of each lattice cell obtained by compressing in the horizontal direction is 5 mm ~ 10 mm, a length ratio of two diagonal lines of the rhombic micropore compressed in the horizontal direction is 0.25 ~ 0.5 : 1, a length of a short diagonal line of the rhombic micropore compressed in the horizontal direction is 0.2 mm ~ 1 mm, and a length of a diagonal line of the square micropore compressed in the horizontal direction is 0.4 mm ~ 4 mm, a porosity range of the 4D-printed bidirectional intelligent temperature control lattice structure is 15% ~ 65%, and a thickness of a shell of the lattice structure is 1.5 mm ~ 4.4 mm.

3. The 4D-printed bidirectional intelligent temperature control lattice structure according to claim 1, **characterized in that**, in step 3, the pressure of the quasi-static compression is 450 MPa ~ 750 MPa, a duration for holding the pressure of compression is 10 s ~ 20 s, and the lattice structure is heated to a temperature of 120°C ~ 200°C.

4. Use of the 4D-printed bidirectional intelligent temperature control lattice structure according to claim 1, **characterized in that**, the 4D-printed bidirectional intelligent temperature control lattice structure is used for manufacturing a high-temperature service part of an aerospace vehicle.
